# EUROPÄISCHE PATENTSCHRIFT

(11) **EP 0 612 278 B1**
(45) Veröffentlichungstag und Bekanntmachung des Hinweises auf die Patenterteilung: **28.02.1996**
(21) Anmeldenummer: 92922983.9
(22) Anmeldetag: 30.10.1992
(51) Int. Cl.: B23B 3/30, B23Q 39/04

(54) **MEHRSPINDEL-DREHMASCHINE**
MULTIPLE-SPINDLE LATHE
TOUR AUTOMATIQUE MULTIBROCHE

(30) Priorität: 11.11.1991 DE 4136916
(43) Veröffentlichungstag der Anmeldung: 31.08.1994
(73) Patentinhaber: PITTLER GMBH, D-63225 Langen (DE)
(72) Erfinder: BAUMBUSCH, Frank, D-6106 Erzhausen (DE); STRATHMEIER, Egon, D-6070 Langen (DE); HAUPT, Bodo, D-6140 Bensheim (DE); KIESELBACH, Frank, D-6070 Langen (DE)
(74) Vertreter: Jochem, Bernd, Dipl.-Wirtsch.-Ing.
(86) Internationale Anmeldenummer: EP9202487
(87) Internationale Veröffentlichungsnummer: WO9309901

(56) Entgegenhaltungen:
- EP-A- 0 003 902
- DD-A- 258 955
- DE-A- 3 320 940
- FR-A- 2 602 703
- US-A- 3 456 557
- US-A- 4 612 690
- PATENT ABSTRACTS OF JAPAN vol. 9, no. 290 (M-430)(2013) 16. November 1985 & JP-A 60 131 101 (NTN TOYO BEARING K.K.) 12 July 1985

## Beschreibung

Die Erfindung betrifft eine Mehrspindel-Drehmaschine mit wenigstens zwei gleichgerichtet parallel nebeneinander angeordneten, unabhängig von einander in Richtung der X- und horizontalen Z-Achse verschieblichen Werkstückspindeleinheiten, die in X-Richtung jeweils zwischen einer Arbeitsstellung, in welcher sie jeweils mit einem Werkzeugträger zusammenwirken, und einer Übergabestellung verfahrbar sind (siehe DE-A-33 37 198).

Um Werkstücke längs- oder planzudrehen, braucht man Relativbewegungen zwischen Werkstück und Werkzeug in Richtung der X-und der Z-Achse, d. h. quer und parallel zur Längsachse der Werkstückspindel. Prinzipiell kann entweder die Werkstückspindeleinheit oder der Werkzeugträger beide Bewegungen ausführen, oder jede der Einheiten nur eine Bewegung in Richtung jeweils einer dieser beiden Achsen. Bei Einspindeldrehmaschinen findet man jede dieser vier theoretischen Möglichkeiten verwirklicht.

Bei Mehrspindel-Drehautomaten kommen weitere Anforderungen hinzu. Sie werden als Produktionsautomaten eingesetzt und dienen normalerweise dazu, an von der einen zur nächsten Spindel weitergereichten Werkstücken nacheinander verschiedene Arbeiten vorzunehmen. Ein entscheidender Faktor für die Wirtschaftlichkeit der Maschinen ist dabei der Transport und die Übergabe der Werkstücke von der einen zur nächsten Werkstückspindeleinheit. Besonders zu beachten ist in diesem Zusammenhang, daß in vielen Fällen die Werkstücke gewendet werden müssen, um auf beiden Seiten bearbeitet zu werden, die Erzielung kurzer Neben- und Umrüstzeiten, der konstruktive Aufwand für die Vorschubantriebe und die Transporteinrichtungen, der Raumbedarf, die Zugänglichkeit des Arbeitsraums, die Notwendigkeit von Schutzeinrichtungen, die Späneabfuhr, die Eingliederung in Fertigunsstraßen und andere sich aus dem Zusammenwirken mehrerer Werkstückspindeleinheiten und der Fertigungsautomatisierung ergebende Bedingungen. Dies sind so viele Faktoren, die sich gegenseitig beeinflussen, daß eine Optimierung schwer fällt.

Bekannte frontbediente Mehrfach-Drehmaschinen mit in paralleler Reihe fest angeordneten, gleichgerichteten Werkstückspindeleinheiten und steuerbaren Werkzeugen brauchen aufwendige Werkstück-Transporteinrichtungen. Um wenigstens die Übergabe zwischen zwei Werkstückspindeln zu vereinfachen, ist es aus der DE-A-33 20 940 bekannt, eine Werkstückspindeleinheit fest und eine benachbarte mit entgegengesetzter Ausrichtung in zwei Achsen beweglich anzuordnen. In diesem Fall können die beiden Werkstückspin-deleinheiten in Flucht gebracht werden, so daß die Werkstücke unmittelbar übergeben werden können und dabei gleichzeitig auch schon gewendet sind. Eine ähnliche Anordnung zu demselben Zweck zeigt die DE-A-38 12 642. Dort sind zwei entgegengesetzt gerichtete Werkstückspindeleinheiten koaxial beweglich. Die Bewegung in Richtung der X-Achse wird von zwei nebeneinander angeordneten Werkzeugrevolvern ausgeführt. Auch die DE-A-38 03 219 sieht zwei konfrontierte, zur Werkstückübergabe koaxial auszurichtende Werkstückspindeleinheiten vor, die ebenso wie die zugehörigen Werkzeugsupporte jeweils nur in einer Achsrichtung verfahrbar sind. Allerdings ist die eine Werkstückspindeleinheit in X-Richtung und die andere in Z-Richtung zu verfahren.

Alle diese Konstruktionen sind nur besonders günstig im Hinblick auf die Werkstückübergabe von der ersten zur zweiten Werkstückspindeleinheit bei gleichzeitigem Wenden des Werkstücks. Auf der anderen Seite ergeben sich jedoch Nachteile aus dem Zusammenrücken aller Einheiten für die Zugänglichkeit, den Raumbedarf, den An- und Abtransport der Werkstücke und die Verkettung mit weiteren Bearbeitungsstationen. Außerdem befinden sich immer Führungen von Werkstückspindeleinheiten und/oder Werkzeugsupporten im Arbeitsraum, die zur Vorbeugung gegen Verschleiß flexibel überdeckt werden müssen.

Aus einem Prospekt "EMAG MSC 02" aus dem Jahre 1991 ist ein frontbedienter Zweispindel-Drehautomat mit parallel nebeneinander angeordneten, gleich ausgerichteten Werkstückspindeleinheiten bekannt, die jeweils nur in Richtung der Z-Achse verfahrbar sind. Die Bewegung in X-Richtung wird von den Werkzeugträgern ausgeführt, deren Führungen sich im Arbeitsraum befinden und abgedeckt werden müssen. Außerdem sind verhältnismäßig komplizierte Zusatzeinrichtungen für das automatische Be- und Entladen sowie für die Übergabe der Werkstücke erforderlich.

Letzteres würde auch für eine weitere bekannte Drehmaschine gemäß DE-U-87 00 343 gelten, bei welcher zwar zwei Werkstückspindeleinheiten nebeneinander und mit gleicher Ausrichtung sowohl in X- als auch in Z-Richtung verfahrbar sind, so daß der Werkzeugträger feststehen kann, jedoch beide Werkstückspindeleinheiten nur gemeinsam bewegt werden können und mit einem gemeinsamen Werkzeugträger zusammenarbeiten. Wollte man bei dieser Ausführung der zweiachsigen Beweglichkeit der Werkstückspindeleinheiten für das Be- und Entladen sowie die Übergabe der Werkstücke ausnutzen, ergäben sich sehr lange Nebenzeiten, da beide Spindelstöcke alle Bewegungen gemeinsam ausführen müssen.

Die Erfindung geht aus von der in der DE 33 37 198 A1 beschriebenen Drehmaschine. Diese besteht aus zwei parallelen Reihen jeweils fluchtender, verhältnismäßig kurzer Führungen in Richtung der X-Achse mit freien Zwischenräumen in jeder Reihe. Die Führungen einer Reihe liegen jeweils einem freien Zwischenraum in der anderen Reihe gegenüber, sind aber länger als dieser. Auf jeder Führung ist eine Werkstückspindeleinheit verschieblich gelagert. Die vorderen Enden der Spindeln weisen in beiden Reihen gegeneinander. Außer bei den Werkstückspindeleinheiten an einem Ende jeder Reihe lassen sich die Spindeln in Zwei Übergabestellungen an den Enden ihrer Führungen verfahren, wo sie jeweils mit einer von zwei benachbart gegenüberliegend angeordneten Werkstückspindeleinheiten fluchten, so daß ein Werkstück durch unmittelbare axiale Übergabe von einer Werkstückspindeleinheit der einen Reihe auf eine Werkstückspindeleinheit der anderen Reihe und nach deren Verfahren in X-Richtung wieder zurück auf eine Werkstückspindeleinheit der ersten Reihe übergeben werden kann. Zwischen den beiden Reihen befinden sich Werkzeugträger, durch die die Bearbeitung der Werkstücke erfolgt und die, da sie in den Arbeits- und Übergabestellungen wirksam sind, jeweils vor der Übergabe zurückgezogen oder verschwenkt werden müssen.

Die bekannte Mehrspindel-Drehmaschine leidet unter dem wesentlichen Mangel, daß sich zwischen den beiden Reihen der Werkstückspindeleinheiten ein schlecht zugänglicher Arbeitsraum ergibt. Die Beobachtung und Bedienung, der Werkzeugwechsel, die Umrüstung auf andere Bearbeitungsaufgaben und die Wartung sind dadurch sehr erschwert. Dasselbe gilt grundsätzlich für alle bekannten Drehmaschinen, bei denen zwei Werkstückspindeleinheiten derart gegenüberliegend angeordnet sind, daß sie in eine koaxiale Übergabeposition verfahrbar sind, um Werkstücke unmittelbar von der einen zur anderen Spindel zu übergeben und dabei gleichzeitig zu wenden. Außerdem befinden sich immer Führungen von Werkstückspindeleinheiten und/oder Werkzeugsupporten im Arbeitsraum, die zur Vorbeugung gegen Verschleiß flexibel überdeckt werden müssen, ein Mangel, unter dem unvermeidbar auch bekannte frontbediente Zweispindel-Drehautomaten mit in X-Richtung verfahrbaren Werkzeugträgern leiden.

Der Erfindung liegt daher die Aufgabe zugrunde, eine Mehrspindel-Drehmaschine zu schaffen, deren Arbeitsraum sich mit einfachen Mitteln leicht abgrenzen läßt, aber gut zugänglich und zu beobachten ist und einfache Be- und Entlade- sowie Wendeeinrichtungen gestattet und deren Umrüstung erleichtert.

Vorstehende Aufgabe wird bei einer Drehmaschine der eingangs genannten Art erfindungsgemäß dadurch gelöst, daß jeder Werkstückspindeleinheit einzeln ein feststehender Werkzeugträger zugeordnet ist und zwei benachbarte Werkstückspindeleinheiten in der zwischen den zugehörigen Arbeitsstellungen angeordneten Übergabestellung mit einer gemeinsamen Wendeeinrichtung zusammenwirken.

Die Erfindung bietet den Vorteil, daß die unabhängig von einander zweiachsig beweglichen Spindeleinheiten einen wesentlichen Teil der Funktionen von Be- und Entlade- sowie Wendeeinrichtungen übernehmen können, wobei von der ohnehin vorhandenen Steuereinrichtung der Werkstückspindeleinheiten Gebrauch gemacht werden kann. Die Wendeeinrichtung kann sehr klein und einfach sein, weil beide Spindelstöcke in X-Richtung dorthin fahren und in Z-Richtung ein Werkstück abgeben bzw. aufnehmen können. kann der Materialfluß in sehr einfacher Weise in X-Richtung von einer zur nächsten Werkstückspindeleinheit fortschreiten, wobei z. B. eine Spindel ein Werkstück jeweils auf einer Seite des feststehenden Werkzeugträgers aufnehmen und auf der anderen Seite mittels der Wendeeinrichtung an die nächste Spindel übergeben kann. Eine Umrüstung der Maschine für andere Aufgaben, wo z. B. zwei Spindeln parallel die länger dauernde Bearbeitung der einen Seite eines Werkstücks übernehmen und danach eine dritte Spindeleinheit die andere Seite aller Werkstücke bearbeitet, ist ohne großen Aufwand möglich, weil die Spindeleinheiten einfach und schnell auf andere Aufnahme-, Übergabe- und Abgabestellungen umsteuerbar sind.

Weitere vorteilhafte Eigenschaften der neuen Drehmaschine finden sich zwar auch bei anderen Maschinen, maximieren aber in ihrer Kombination den Gesamtnutzen. Hervorzuheben ist die Tatsache, daß alle Werkstückspindeleinheiten mit Schlitten und Vorschubantrieben identisch sein können. Sie können auf einer gemeinsamen, durchgehenden Führung gelagert sein. Der Arbeitsraum läßt sich vor den Schlittenführungen der Spindelstöcke durch eine senkrechte Wand abtrennen, so daß die Führungen nicht überdeckt zu werden brauchen. Im Arbeitsraum sind alle Teile von der Frontseite aus gut zugänglich, weil er flach sein kann und die Einrichtungen für die Zu- und Abfuhr sowie das Wenden der Werkstücke nur wenig Raum beanspruchen, denn einen wesentlichen Teil des Transports und der Übergabe zwischen den Spindeln bewerkstelligen die verfahrbaren Spindeleinheiten. Bei Verwendung drehbarer Werkzeugträger können zudem während der Bearbeitung die gerade nicht in Einsatz befindlichen Werkzeuge gewechselt werden.

Um eine vollständige Bearbeitung eines flachen Werkstücks auf beiden Seiten auszuführen, schlägt die Erfindung unter Einsatz der neuen Mehrspindel-Drehmaschine ein Arbeitsverfahren vor, welches dadurch gekennzeichnet ist, daß eine erste Werkstückspindeleinheit an einer Ladestation durch Bewegung in Z-Richtung ein Werkstück lädt, nach einer Verfahrbewegung in X-Richtung in eine erste Arbeitsstation während einer ersten Bearbeitung das Werkstück in X- und/oder Z-Richtung geführt wird, anschließend das Werkstück durch die erste Werkstückspindeleinheit in X-Richtung zu einer Wendeeinrichtung transportiert und durch Bewegung in Z-Richtung auf diese übertragen wird, dann in der Wendeeinrichtung um 180° gedreht wird, danach durch Bewegung einer zweiten, parallel und gleichgerichtet neben der ersten angeordneten Werkstückspindeleinheit in Z-Richtung von dieser geladen, durch deren Bewegung in X-Richtung zu einer zweiten Arbeitsstation transportiert, dort während einer zweiten Bearbeitung von der zweiten Werkstückspindeleinheit in X- und/oder Z-Richtung geführt und schließlich von ihr durch Verfahrbewegungen in X- und Z-Richtung auf eine Entladeeinrichtung übertragen wird.

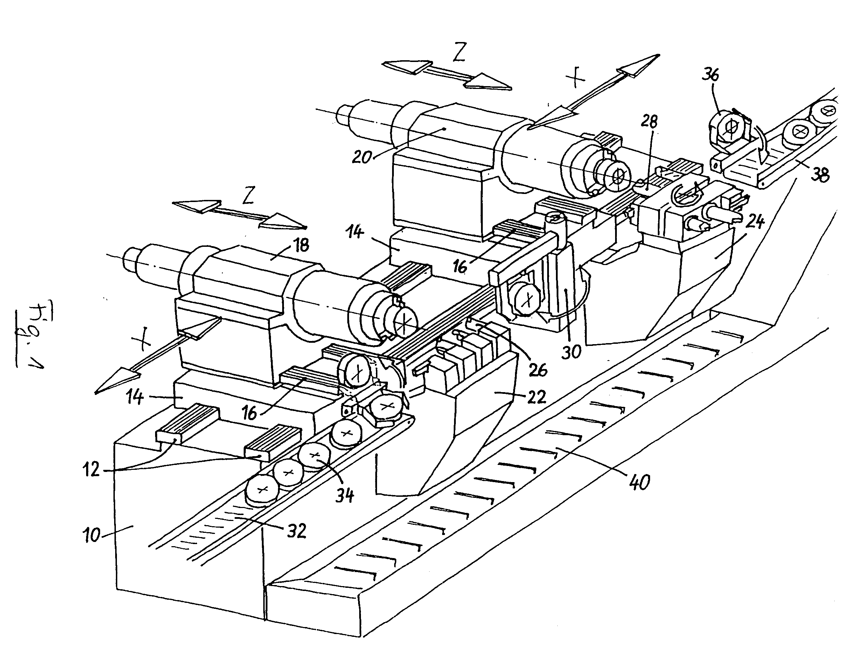

Ein Ausführungsbeispiel der Erfindung wird nachstehend anhand der Zeichnung näher erläutert. Diese zeigt eine Zweispindel-Drehmaschine in perspektivischer Darstellung schräg von vorn.

Die als Ausführungsbeispiel gezeigte Maschine hat ein längliches Bett 10 mit einer Längsführung 12 auf der Oberseite. Sie erstreckt sich im wesentlichen über die gesamte Länge des Betts 10. Im Beispielsfall sind darauf zwei Kreuzschlitten 14 geführt, die jeweils auf ihrer Oberseite eine sich quer zur Längsführung 12 erstreckende Führung 16 haben. Auf der Führung 16 des mit Bezug auf die Zeichnung linken Kreuzschlittens 14 ist eine erste Werkstückspindeleinheit 18 verschieblich gelagert. In gleicher Weise sitzt auf dem rechten Kreuzschlitten 14 eine zweite Werkstückspindeleinheit 20. Beide Werkstückspindeleinheiten 18, 20 können - müssen aber nicht - gleich sein.

Der grundsätzliche Aufbau solcher Werkstückspindeleinheiten, wie sie in der Zeichnung bildlich dargestellt sind, ist z. B. aus der EP-B 94 680, EP-B 84 271 und der EP-A 381 009 bekannt, so daß darauf nicht näher eingegangen zu werden braucht. Am vorderen Ende verfügen die Werkstückspindeleinheiten 18, 20 jeweils in bekannter Weise über eine Werkstückspanneinrichtung in Form eines Futters. Die damit erfaßten Werkstücke werden während der Bearbeitung von den Werkstückspindeleinheiten 18, 20 in Drehung versetzt.

An der Vorderseite des Betts 10 sind zwei Werkzeugträger 22, 24 fest angeordnet. Die in sie eingesetzten Werkzeuge 26, 28 stehen während eines Bearbeitungsvorgangs fest. Wenn die Werkzeuge, wie bei 28 gezeigt, in einen mehrseitigen, drehbaren Werkzeughalter eingesetzt sind, besteht die Möglichkeit, während einer laufenden Bearbeitung auf der nicht in Einsatz befindlichen Seite des Werkzeughalters die Werkzeuge zu wechseln.

Zwischen den beiden Werkzeugträgern 22, 24 ist am Bett 10 eine Werkstück-Wendeeinrichtung 30 befestigt. Sie besteht einfach nur aus einem um 180° um eine senkrechte Achse hin und her drehbaren Rahmen, der ein Werkstück vorübergehend aufnehmen und halten kann.

Ein Förderer 32 transportiert die zu bearbeitenden Rohlinge 34 zu einer Ladestation links neben dem Werkzeugträger 22. Es reicht aus, wenn dafür gesorgt ist, daß der Förderer 32 die Rohlinge 34 in eine koaxiale Lage vor die Spindel der ersten Werkstückspindeleinheit 18 transportiert. Dies kann, wie gezeigt, durch eine Klappe geschehen, welche die liegend antransportierten Werkstücke aufstellt, wobei sie auch in die richtige Höhe zur Aufnahme durch die Spindel gebracht werden, oder aber, die Werkstücke werden aufrecht direkt vor die Spindel gerollt. Das Laden selbst kann in jedem Fall durch Verfahrbewegungen der Werkstückspindeleinheit 18 erfolgen. In entsprechender Weise können durch Verfahrbewegungen der zweiten Werkstückspindeleinheit 20 die fertig bearbeiteten, mit 36 bezeichneten Werkstücke am rechten Ende der Maschine auf einen weiteren Förderer 38 entladen werden.

Um die Rohlinge 34 zu bearbeiten, werden sie an der Ladestation auf der linken Seite der Maschine mittels der Spanneinrichtung der ersten Werkstückspindeleinheit 18 vom Förderer 32 genommen. Dazu bedarf es keiner Übergabeeinrichtung, weil die Werkstückspindeleinheit 18 längs der Führung 16 ihres Kreuzschlittens 14 in Richtung der Z-Achse verfahrbar ist. Durch eine Verfahrbewegung des Kreuzschlittens 14 entlang der Längsführung 12, d. h. in Richtung der X-Achse, wird die Werkstückspindeleinheit 18 dann in eine Arbeitsstellung gegenüber dem Werkzeugträger 22 gefahren. Mittels der Werkzeuge 26 findet die Drehbearbeitung der einen Seite der Werkstücke 34 statt, wobei die erforderlichen Relativbewegungen zwischen Werkstück und Werkzeug durch gesteuerte Bewegung der Werkstückspindeleinheit 18 in X-Richtung längs der Führung 12 und/oder in Z-Richtung längs der Führung 16 erfolgt.

Nachdem die Werkstücke auf einer Seite bearbeitet worden sind, findet der Transport zur nächsten Werkstückspindeleinheit 20 ohne zusätzliche Transporteinrichtung statt. Die erste Werkstückspindeleinheit 18 bringt das Werkstück durch eine weitere Verfahrbewegung in X-Richtung zur Wendeeinrichtung 30 und übergibt es dieser durch Bewegung in Z-Richtung. Letztere braucht das Werkstück nur zu wenden, wobei es, anders als gezeigt, auch um eine horizontale Achse gedreht werden kann. Je nach Ausführung der Wendeeinrichtung 30 kann bis dahin schon die zweite Werkstückspindeleinheit 20 in X-Richtung zu dieser gefahren sein. Da sie auch in Z-Richtung verfahrbar ist, kann sie selbst unmittelbar das Werkzeug aus der Wendeeinrichtung 30 übernehmen, im Zusammenwirken mit den feststehenden Werkzeugen 28 die für die spanende Bearbeitung erforderlichen Werkstückbewegungen ausführen und schließlich das fertige Werkstück 36 mittels einer Klappe auf dem Förderer 38 ablegen.

Um die Werkstückspindeleinheiten, ihre Führungen und die Werkzeuge sowie die Wendeeinrichtung und die Förderer für den An- und Abtransport der Werkstücke zu zeigen, sind in der Zeichnung die Begrenzungswände des Arbeitsraums weggelassen worden. Es ist jedoch ohne weiteres ersichtlich, daß eine senkrechte Wand mit verschieblichen Elementen, durch die hindurch sich die vorderen Enden der Werkstückspindeln erstrecken, vor den Kreuzschlitten 14 angeordnet sein kann, so daß alle Führungen hinter der Trennwand und damit außerhalb des Arbeitsraums liegen. Sie brauchen deshalb nicht überdeckt zu werden.

Abweichend vom gezeichneten Ausführungsbeispiel können auf einem einstückigen oder aus mehreren Teilen zusammengesetzten Maschinenbett auch mehr als zwei Werkstückspindeleinheitem in der gezeigten Weise in X- und Z-Richtung verschieblich gelagert sein. Manchmal ist eine Unterbrechung des Maschinenbetts und der Längsführung 12 zwischen zwei Werkstückspindeleinheiten zweckmäßig, um gegenseitige Beeinträchtigungen zu vermeiden, wie z. B. die Überleitung von Vibrationen, die bei einem unterbrochenen Schnitt entstehen. Schließlich ist anzumerken, daß statt der gezeigten flachen Gleitführungen 12 und 16 andere geeignete Lagerungen für die Werkstückspindeleinheiten eingesetzt werden können.

Der Abtransport der Späne kann vorteilhafterweise entlang der Vorderseite des Maschinenbetts mittels eines Förderers 40 erfolgen.

## Patentansprüche

1. Mehrspindel-Drehmaschine mit wenigstens zwei gleichgerichtet parallel nebeneinander angeordneten, unabhängig von einander in Richtung der X- und horizontalen Z-Achse verschieblichen Werkstückspindeleinheiten (18, 20), die in X-Richtung jeweils zwischen einer Arbeitsstellung, in welcher sie jeweils mit einem Werkzeugträger (22, 24) zusammenwirken, und einer Übergabestellung verfahrbar sind**, dadurch gekennzeichnet**, daß jeder Werkstückspindeleinheit (18, 20) einzeln ein feststehender Werkzeugträger (22, 24) zugeordnet ist und zwei benachbarte Werkstückspindeleinheiten (18, 20) in der zwischen den zugehörigen Arbeitsstellungen angeordneten Übergabestellung unmittelbar mit einer gemeinsamen Wendeeinrichtung (30) zusammenwirken.

2. Mehrspindel-Drehmaschine nach Anspruch 1, **dadurch gekennzeichnet**, daß die Führungen (12, 16) der Werkstückspindeleinheiten (18, 20) außerhalb eines durch Wände abgegrenzten Arbeitsraumes angeordnet sind, in welchem sich die Werkzeugträger (22, 24) und Werkstückspanneinrichtung an den vorderen Enden der Werkstückspindeleinheiten (18, 20) befinden.

3. Mehrspindel-Drehmaschine nach Anspruch 1 oder 2, **dadurch gekennzeichnet**, daß die Werkstückspindeleinheiten (18, 20) in Z-Richtung verschieblich auf Schlitten (14) gelagert sind, die längs einer gemeinsamen Führung (12) in X-Richtung verfahrbar sind.

4. Mehrspindel-Drehmaschine nach einem der Ansprüche 1 bis 3, **dadurch gekennzeichnet**, daß wenigstens ein Werkzeugträger ein ortsfest gelagerter Werkzeugrevolver ist.

5. Mit einer Mehrspindel-Drehmaschine nach einem der Ansprüche 1 bis 4 auszuführendes Arbeitsverfahren, **dadurch gekennzeichnet**, daß eine erste Werkstückspindeleinheit (18) an einer Ladestation durch Bewegung in Z-Richtung ein Werkstück (34) lädt, nach einer Verfahrbewegung in X-Richtung in eine erste Arbeitsstation während einer ersten Bearbeitung das Werkstück in X- und/oder Z-Richtung geführt wird, anschließend das Werkstück durch die erste Werkstückspindeleinheit (18) in X-Richtung zu einer Wendeeinrichtung (30) transportiert und durch Bewegung in Z-Richtung auf diese übertragen wird, dann in der Wendeeinrichtung um 180° gedreht wird, danach durch Bewegung einer zweiten, parallel und gleichgerichtet neben der ersten angeordneten Werkstückspindeleinheit (20) in Z-Richtung von dieser geladen, durch deren Bewegung in X-Richtung zu einer zweiten Arbeitsstation transportiert, dort während einer zweiten Bearbeitung von der zweiten Werkstückspindeleinheit (20) in X- und/oder Z-Richtung geführt und schließlich von ihr durch Verfahrbewegungen in X- und Z-Richtung auf eine Entladeeinrichtung (38) übertragen wird.

## Claims

1. A multiple-spindle lathe with at least two workpiece spindle units (18, 20) which are arranged in parallel side by side and act in the same direction and which are displaceable independently of one another in the direction of the X axis and horizontal Z axis, which workpiece spindle units are movable in the X-direction respectively between an operative position, in which they co-operate respectively with a tool carrier (22, 24), and a transfer position, characterised in that each workpiece spindle unit (18, 20) is individually associated with a stationary tool carrier (22, 24) and at the transfer position disposed between the associated operative positions
two adjacent workpiece spindle units (18, 20) co-operate directly with a common reversing means (30).

2. A multiple-spindle lathe according to Claim 1, characterised in that guides (12, 16) for the workpiece spindle units (18, 20) are disposed outside an operating space defined by walls, in which the tool carriers (22, 24) and the workpiece-holding device at the front ends of the workpiece spindle units (18, 20) are situated.

3. A multiple-spindle lathe according to Claim 1 or 2, characterised in that the workpiece spindle units (18, 20) are mounted displaceably in the Z-direction on slides (14) which are movable along a common guide (12) in the X-direction.

4. A multiple-spindle lathe according to any one of Claims 1 to 3, characterised in that at least one tool carrier is a tool turret mounted at a fixed location.

5. An operating process to be carried out with a multiple-spindle lathe according to any one of Claims 1 to 4, characterized in that a first workpiece spindle unit (18) loads a workpiece (34) at a charging station by movement in the Z-direction, the workpiece is guided during a first machining operation in the X-direction and/or Z-direction after a conveying movement in the X-direction to a first operating station, subsequently the workpiece is conveyed by the first workpiece spindle unit (18) in the X-direction to a reversing means (30) and is transferred thereto by movement in the Z-direction, is then turned through 180° in the reversing means, then by movement in the Z-direction of a second workpiece spindle unit (20), which is arranged parallel and at the side of the first workpiece spindle unit and acts in the same direction, is loaded by the second workpiece spindle unit, is conveyed by the movement thereof in the X-direction towards a second operating station, is guided there during a second machining operation by the second workpiece spindle unit (20) in the X-direction and/or Z-direction and, finally, is transferred thereby by conveying movements in the X-direction and Z-direction to an unloading device (38).

## Revendications

1. Tour multibroche comportant au moins deux têtes à broche porte-pièce (18, 20), montées parallèlement dans le même sens côte à côte et mobiles indépendamment selon des axes X et Z horizontaux, chacune des têtes pouvant se déplacer, selon la direction X, entre une position de travail où elle coopère avec un porte-outil (22, 24) et une position de transfert de la pièce, caractérisé en ce qu'à chaque tête porte-pièce (18, 20) est associé un porte-outil fixe (22, 24), deux têtes voisines (18, 20) coopérant directement avec un dispositif commun de pivotement (30) disposé à
une position de transfert située entre leurs positions de travail respectives.

2. Tour multibroche selon la revendication 1, caractérisé en ce que les guidages (12, 16) des têtes porte-pièce sont disposées à l'extérieur d'un espace de travail délimité par des parois et à l'intérieur duquel se trouvent les porte-outils (22, 24) et les dispositifs de serrage de la pièce situés aux extrémités avant des têtes porte-pièce (18, 20).

3. Tour multibroche selon la revendication 1, caractérisé en ce que les têtes porte-pièce (18, 20) peuvent coulisser, selon la direction Z, sur des chariots (14) qui peuvent eux-mêmes se déplacer, selon la direction X, le long d'un guidage commun (12).

4. Tour multibroche selon l'une des revendications 1 à 3, caractérisé en ce qu'au moins un porte-outil est du type revolver, monté fixe.

5. Procédé d'usinage utilisant un tour multibroche selon l'une des revendications 1 à 4, caractérisé par les opérations suivantes :
- une première tête porte-pièce (18) occupant un poste de chargement, vient, par un déplacement selon la direction Z, prendre en charge une pièce de travail (34), puis se déplace selon la direction X pour venir occuper un premier poste de travail dans lequel, pendant l'usinage, la pièce est déplacée selon les directions X et/ou Z ;
- ensuite, la pièce est amenée, par déplacement de la première tête porte-pièce (18) selon la direction X, à un dispositif de pivotement auquel elle est transférée par déplacement selon la direction Z ;
- le dispositif de pivotement fait tourner la pièce de 180°;
- une seconde tête porte-pièce (20), disposée parallèlement à la première, à coté d'elle et dans le même sens, vient, par un déplacement selon la direction Z, prendre en charge la pièce et l'amène, par un déplacement selon la direction X, à un second poste de travail ;
- pendant son second usinage, la pièce est déplacée selon les directions X et Z par la tête porte-pièce (20) qui enfin, en se déplaçant elle-même selon les mêmes directions X et Z, la transmet à un dispositif d'évacuation (38).
